# EUROPEAN PATENT APPLICATION

(11) **EP 2 985 495 A2**
(43) Date of publication of application: **17.02.2016**
(21) Application number: 15001975.0
(22) Date of filing: 02.07.2015
(51) Int. Cl.: F16H 63/42

(54) **A SAFETY DEVICE FOR INDICATING THE DISENGAGED AND ENGAGED POSITION OF THE DRIVE SHAFT AND THE GEARS IN A GEARBOX OF A TWO WHEELED VEHICLE**

(30) Priority: 02.07.2014 IN MU21402014
(71) Applicant: Star Engineers India Pvt. Ltd., Pune 412114 (IN)
(72) Inventor: Ramraika, Divya, Pune 411044 (IN); Madhu, Saurabh, Pune 411014 (IN)
(74) Representative: Monteiro Alves, Inês

(57) **Abstract**

A contactless and failsafe safety device for indicating the disengaged and engaged position of the drive shaft and the gears in a gearbox of a two wheeled vehicle is disclosed

## Description

### FIELD OF THE INVENTION:

The present invention relates to two wheeler transmission. In particular, this invention relates to a device for providing improved safety in indicating the disengaged position of the engine and the gears typically known as neutral gear of the vehicle.

### BACKGROUND OF THE INVENTION

In a internal combustion engine powered vehicle, the power produced varies as per the revolutions per minute (rpm) from "low" at idling to the "high" at the rated maximum rpm of the engine. Also the torque required to propel varies from a high starting torque to a substantially lower running torque. A gear box is used to keep the vehicle operating within the rated power band of the vehicle. Shifting the gears in a vehicle's transmission may be manual or automatic.

In most of the modem motorcycles changing of gears is achieved by a foot operated lever. The manual transmission system of a two-wheeler typically includes a sequential gearbox. In a sequential gearbox of a motorcycle either first or second gear can be directly selected from neutral, but higher gears may only be accessed in order and it is not possible to shift from second gear to fourth gear without shifting through third gear. A five-speed gearbox of this configuration would be known as "one down, four up" because of the placement of the gears with relation to neutral.

The clutch in a manual-shift motorcycle transmission is used to engage and disengage the engine output from the gearbox input shaft to aid the shifting of the gears. The clutch is typically an arrangement of plates stacked in alternating fashion, one linked to the engine output and the other linked to the gearbox input shaft. A clutch lever typically provided on the handlebar when depressed, releases the clutch springs through a cable or hydraulic operating arrangement, to allow the engine to freewheel with respect to the transmission.

Starting the motor cycle engine from an "engine off' condition may be through a 'kick start' lever or through a starter motor using the battery of the vehicle. Attempting to start the vehicle when the gears are in any position other than the neutral gear can lead to damage to the gear box, accidents and injuries to the rider and also to the bystanders. The fuel economy of a two wheeler is dependent on driving the vehicle at the optimum engine speed within the rated power band of the vehicle. This can be achieved by selecting a appropriate higher or lower gear depending on the road speed of the vehicle and instantaneous torque requirement. It would be optimal for the rider to know the gear in which the vehicle is at any given instant to decide whether he should shift the gear up or down. A wrong selection results in wastage of fuel and efforts.

Various attempts have been made to alert the rider about the neutral position of the gear engagement at standstill position and the 'instantaneous engaged gear' in a moving condition of the vehicle by providing visual or audio indication devices. At a standstill condition of the vehicle it is also possible to prevent engine start by a suitable switch device.

### OBJECTS OF THE PRESENT INVENTION

An object of this invention is to provide a device for improved safety in indicating engaged or disengaged position of the gear box of the two wheeled vehicle.

Still another object of this invention is to provide a safety device that is fail safe in indicating the disengaged position of the engine and the gears typically known as neutral gear of the two wheeled vehicle.

Yet another object of this invention is to provide a safety device, for indicating the disengaged position of the engine and the gears, adapted to function even in adverse atmospheric conditions and in inclement weather.

Yet another object of this invention is to provide a safety device, for indicating the disengaged position of the engine and the gears, that is free from wear and tear of the components and adapted to function accurately repeatedly.

Yet another object of this invention is to provide a safety device, for indicating the disengaged position of the engine and the gears, that can function even at high ambient temperatures.

Yet another object of this invention is to provide a safety device, for indicating the disengaged position of the engine and the gears, that is easy to install.

Yet another object of this invention is to provide a device, for indicating the disengaged position of the engine and the gears that does not require periodic servicing or maintenance to be carried out.

### BRIEF DESCRIPTION OF ACCOMPANYING DRAWINGS

All aspects and advantages of the present invention will become apparent with the description of the preferred non limiting embodiment, when read together with the accompanying drawings, in which:
Figure 1 is the exploded view of the device for indicating the disengaged position of the engine and the gears in accordance with this invention;
Figures 2 and 3 are the elevation and sectional view of the housing of a conventional device for indicating the disengaged position of the engine, wherein figure 3 depicts the unit in a neutral gear position;
4 is the sectional view of the housing of a conventional device for indicating the engaged position of the engine, wherein unit is depicted in a condition other than the neutral gear position;
Figure 5 is a three dimensional view of the housing of the device for indicating the engaged position of the engine and the gears in accordance with this invention as shown in Figure 1;
Figure 6 and 7 are elevation and plan of the printed circuit board of the device for indicating the disengaged position of the engine and the gears in accordance with this invention as shown in figure 1;
Figures 8 and 9 are the elevation and sectional view of the housing of the device for indicating the disengaged position of the engine and the gears in accordance with this invention as shown in Figure 1, wherein figure 9 depicts the unit in a neutral gear position; and
Figure 10 is the sectional view of the housing of the in accordance with this invention as shown in Figure 1, wherein unit is depicted in a condition other than the neutral gear position.

### SUMMARY OF THE INVENTION

According to this invention there is provided a device for indicating the engaged position of the engine and the gears, said device comprising:

A device for the indication of engagement of gears in a two wheeler said device comprising: a housing provided with a central disc having a substantially symmetrical, integral, arcuate peripheral flange, defining a central cylindrical cavity; said central disc provided with at least one spaced out locating element and at least one projection ; said locating element defining a locating surface; an integrated circuit board member provided with a central cutout defining a perpendicular axis , and openings ; said electronic circuit provided with at least one sensor and components adapted to sense variation in magnetic flux (lines of force surrounding a permanent magnet) density, generate and transmit such signals; in an assembled configuration of the board member and the housing, said locating element and projection adapted so as to engage said openings respectively in a pre-configured orientation; a movable element adapted to be angularly displaced with reference to said perpendicular axis; and a sealing plug element adapted to rigidly mount said board member on said locating surface so as to maintain uniform air gap between said movable element and sensor in said pre-configured orientation.

Typically the sensor unit is a complementary metal oxide semiconductor (CMOS) Hall sensor having facility to switch the direction of current through the Hall elements.

Typically the sealing plug element is a cast able polymer.

Typically the device is adapted to be retrofitted to a two wheeled vehicle.

### DESCRIPTION OF THE INVENTION

The present invention relates to a device which overcomes the limitations hitherto encountered in existing devices for indicating the engaged position of the engine and the gears.

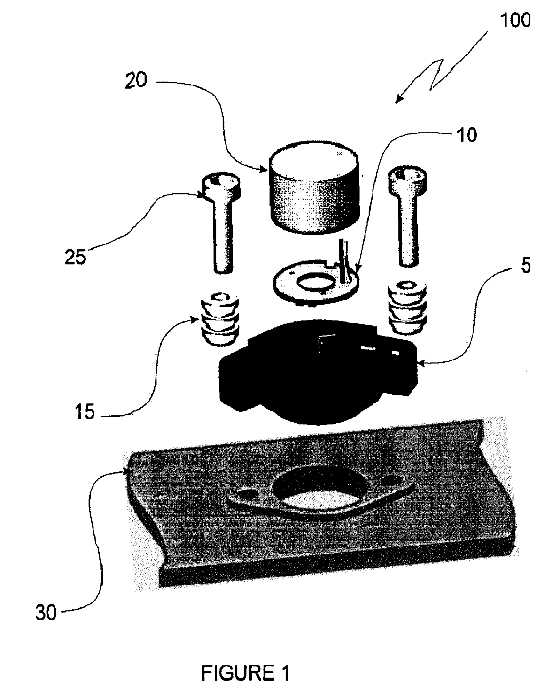

Referring figure 1, the safety device for indicating the disengaged position of the engine and the gears of a two wheeler in accordance with this invention is indicated generally by the reference numeral(100). The safety device for indicating the disengaged position of the engine and the gears of a two wheeler (100) comprises a housing (5) adapted to be fastened to the crank case (30) of the two wheeler. The housing (5) is adapted to receive and accurately position a circular disc shaped printed circuit board member (10). The housing (5) is provided with bush elements (15) and fasteners (25) adapted to locate and position the housing (5) on the crank case (30) of the two wheeler. A cast-able sealing plug element (20) locates the printed circuit board member (10) within the housing providing insulation against ingress of moisture dust particles and other foreign materials.

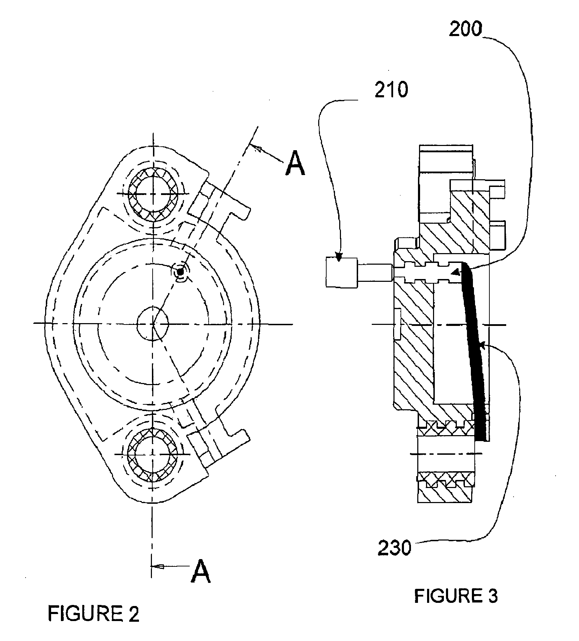

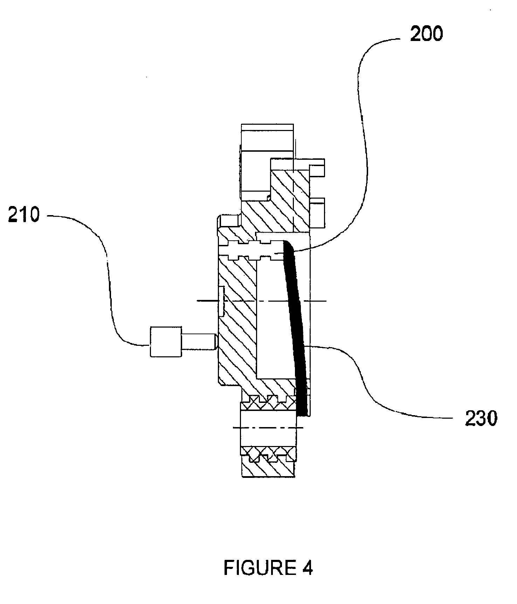

Referring to Figures 2, 3 and 4 a conventional device for indicating the neutral gear of the two wheeler is shown. The arrangement essentially consists of electrical contact point (200) moulded in a thermosetting plastic (typically 'Bakelite') material having a insulated conducting wire (230) connected to it. A metallic pin (210) provided within the crankcase (not specifically shown) on the gear shifter link (not specifically shown) is adapted to be angularly displaced with reference to the central axis "Y" when the foot operated shifter lever is depressed. In the neutral gear position of the foot operated shifter lever the metallic pin (210) and the electrical contact point (200) are in angular alignment, as shown in Figure 3, and complete the electrical circuit to turn 'on' an indicator lamp. In any other gear engagement like the first, second, third gears the angular displacement of the metallic pin (210) breaks the electrical circuit, as shown in figure 4, turning the indicator lamp to a 'off' position. It is also possible to provide multiple metallic pins for indicating the first, second, third and other such gears provided in the transmission system of the vehicle.

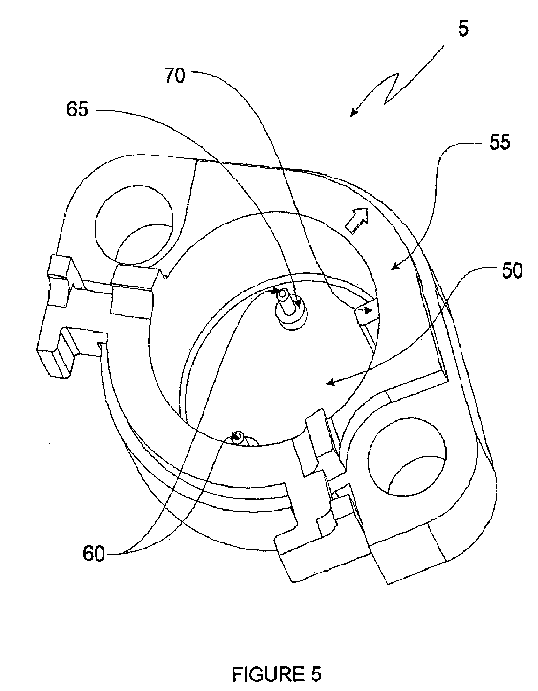

Referring to figure 5 the housing (5) comprises of a central disc (50) provided with an integral and substantially symmetrical arcuate peripheral flange (55) defining a central cylindrical cavity. The central disc (50) also provided with spaced out locating pins (60) defining locating seat surfaces (65). The central disc (50) further provided with a substantially rectangular projection (70) abutting the peripheral flange (55). Said locating pins (60) and projection (70) positioned within said central cylindrical cavity.

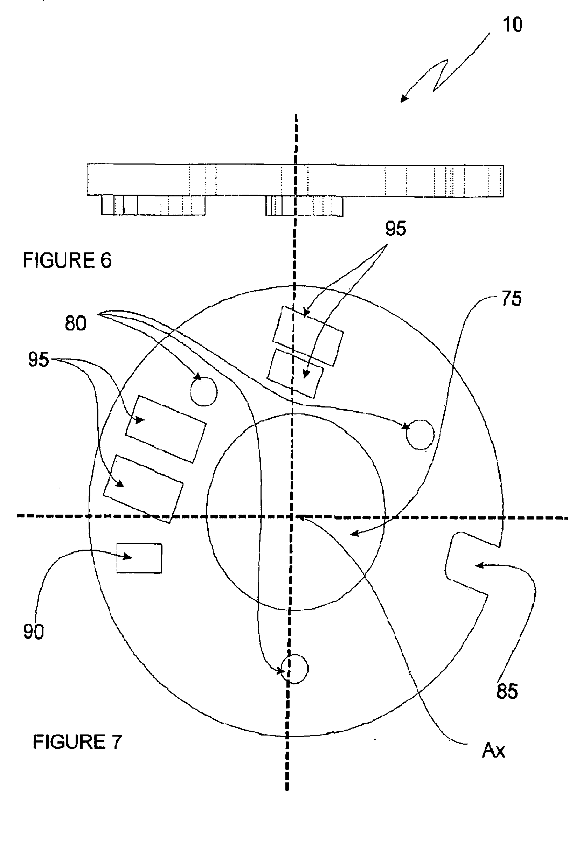

Referring to figures 6 and 7 the printed circuit board member (10) is a circular disc having a central circular cut-out (75) defining a perpendicular axis "Ax" . The printed circuit board member (10) further provided with mounting location openings (80) and (85) complementary to said spaced out locating pins (60) and substantially rectangular projection (70) respectively. A sensor unit (90) and interconnected component like resisters and capacitors (95) are mounted on the printed circuit board member (10). In an assembled condition of the housing (5) and the printed circuit board member (10) the mounting location openings (80) and (85) and the complementary locating pins (60) and projection (70) are adapted locate and maintain a predesigned spatial relation between said housing (5) and the sensor (90) mounted on said printed circuit board member (10).

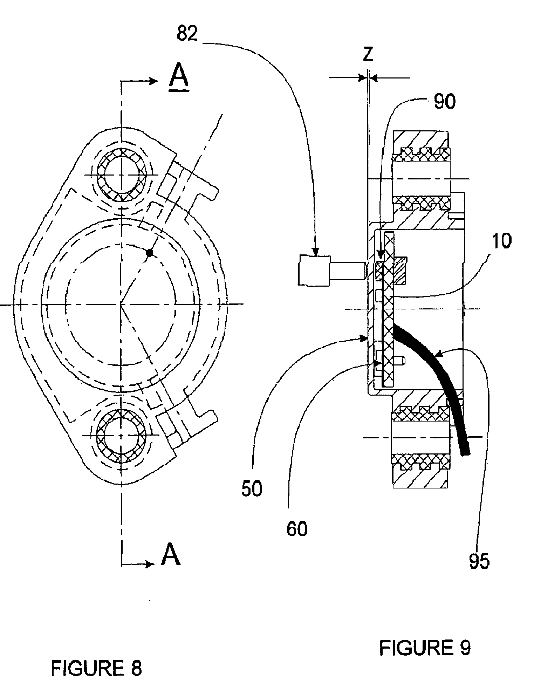

Referring to Figures 8 and 9 the safety device (100) for indicating the disengaged position of the engine and the gears of a two wheeler in accordance with this invention is shown. The safety device (100) operates by sensing the proximity of a metal element (82) provided within the crankcase (not specifically shown) with reference to the sensor unit (90). The sensor unit (90) typically is a complementary metal oxide semiconductor (CMOS) Hall sensor having facility to switch the direction of current through the Hall elements thereby eliminating the offset errors typical of semiconductor Hall elements. Other features like preset-able functional characteristics like gain, offset, temperature coefficient of gain (to compensate different magnetic materials thermal dependencies) provides programmable algorithms for complex signal processing in real time.

In this invention a change in the magnetic flux intensity causes a protected, magnetically biased pre-programmed sensor unit (90) to go in a precise switch mode. The switching and hysteresis is controlled by the movable metal element (82) positioned accurately with controlled air gap "Z" (refer figure 9) between the one face of the central disc (50) and the metal element (82). The movable metal element (82) provided within the crankcase (not specifically shown) on the gear shifter link (not specifically shown) is adapted to be angularly displaced with reference to the central axis "Ax" (refer to figure 9) when the foot operated shifter lever is depressed. In the neutral gear position of the foot operated shifter lever the metal element (82) and the sensor unit (90) are in angular alignment. In this operative position, (refer to figure 9) the magnetically biased pre-programmed sensor unit (90) to go in a precise switch "ON" mode, generating a signal to indicate the neutral position of the engagement of the gears provided in the transmission system. This signal may be converted to visual, audio alert to indicate that it is safe to start the engine either using a kick start or operating a start button provided on the vehicle.

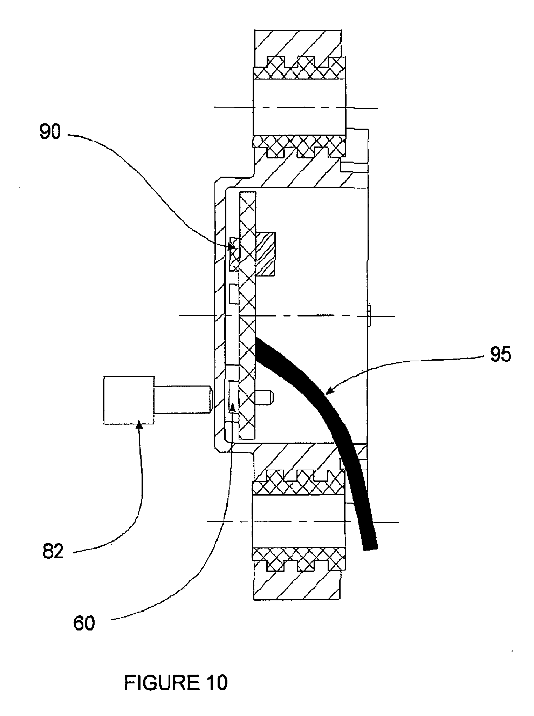

In any other gear engagement like the first, second, third gears (refer to figure 10) the angular displacement of the metal element (82) with reference to the central axis "Ax" causes the sensor unit (90) to go in a precise switch "OFF" mode, generating a signal to indicate the non neutral position of the engagement of the gears provided in the transmission system. This signal may be converted to visual, audio alert or used to prevent engine start.

The variation in magnetic flux created by the moving metal element (82) at different positions, representing engagement of first, second or any other higher gear is accurately sensed at the corresponding sensing points by the change in the magnetic flux intensity of a combination of sensors. This provides for a accurate indication of the first, second, third and other such gears provided in the transmission system of the vehicle.

The advantages of this invention includes:
1. There are no wear and tear of the components used in the device as the sensing the position of foot operated shifter lever and generating appropriate signal is fully contact less. This ensures error free sensing in more than one million repetitions.
2. the components of the device are fully enclosed in a dust and weather proof sealing plug element (20) ensuring maintenance free operation.
3. The extent of angular displacement and locational accuracy is controlled by the complementing projections and openings provided in the housing and the printed circuit board enabling error free fitment.
4. The air gap between the move-able and the fixed components within their entire range of angular displacement is constant. This ensures non varying signal generation repeatedly.
5. This device may be fitted on varying models and types of two wheelers as modification is required only in the housing for mechanical fitment. Within the same model or type of two wheeler the variations of vehicle body part and does not adversely affect on the signal generation performance. This makes the fitment of the unit to the vehicle easy requiring low skill levels.
6. As the sensor unit is pre-programmable, over a wide range of design variables as required for different models and types of two wheelers, the inventory cost in manufacturing is reduced considerably and the device is highly suitable of for just-in -time inventory management practice at the vehicle assembly line.

While considerable emphasis has been placed herein on the particular features of "a safety device for indicating the neutral or the engaged position of the gears provided in the gear box of a two wheeler" and the improvisation with regards to it, it will be appreciated that various modifications can be made, and that many changes can be made in the preferred embodiment without departing from the principles of the invention. These and other modifications in the nature of the invention or the preferred embodiments will be apparent to those skilled in the art from the disclosure herein, whereby it is. to be distinctly understood that the foregoing descriptive matter is to be interpreted merely as illustrative of the invention and not as a limitation.

## Claims

1. A device (100) for the indication of engagement of gears in a two wheeler said device comprising:
( i ) a housing (5) provided with a central disc (50) having a substantially symmetrical, integral, arcuate peripheral flange (55) defining a central cylindrical cavity; said central disc (50) provided with at least one spaced out locating element (60) and at least one projection (70); said locating element defining a locating surface (65);
(ii) an integrated circuit board member (10) provided with a central cutout (75) defining a perpendicular axis (Ax), and openings (80 and 85); said electronic circuit provided with at least one sensor (90) and components adapted to sense variation in magnetic flux density, generate and transmit such signals; in an assembled configuration of the board member (10) and the housing (5), said locating element (60) and projection (70) adapted so as to engage said openings (80 and 85) respectively in a pre-configured orientation;
(iii) a movable element (82) adapted to be angularly displaced with reference to said perpendicular axis (Ax); and
(iv) a sealing plug element (20) adapted to rigidly mount said board member (10) on said locating surface (65) so as to maintain uniform air gap between said movable element (82) and sensor (90) in said pre-configured orientation.

2. A device (100) for the indication of engagement of gears in a two wheeler as claimed in claim (1) wherein the sensor unit is a complementary metal oxide semiconductor (CMOS) Hall sensor having facility to switch the direction of current through the Hall elements.

3. A device (100) for the indication of engagement of gears in a two wheeler as claimed in claim (1) wherein the sealing plug element is a cast able polymer.

4. A device (100) for the indication of engagement of gears in a two wheeler as claimed in the preceding claims adapted to be retrofitted to a two wheeled vehicle.

5. A device (100) for the indication of engagement of gears in a two wheeler as described herein above with reference to the accompanying drawings.
